# EUROPEAN PATENT APPLICATION

(11) **EP 4 764 901 A1**
(43) Date of publication of application: **24.06.2026**
(21) Application number: 25208648.3
(22) Date of filing: 14.10.2025
(51) Int. Cl.: G06F 17/10, G06F 16/901, H04L 41/12

(54) **DETERMINATION OF ONE OR MORE MAXIMAL CLIQUES IN AN UPDATED CONNECTIVITY GRAPH**

(30) Priority: 19.12.2024 US 202418988122
(71) Applicant: The Boeing Company, Arlington, VA 22202 (US)
(72) Inventor: WEISKIRCHER, Kyle Allen, Arlington, 22202 (US); GARRISON, William T., Arlington, 22202 (US)
(74) Representative: Sandri, Sandro

(57) **Abstract**

A computing device may determine, based on first information identifying one or more maximal cliques in a first connectivity graph, a set of potential cliques in a second connectivity graph that is an updated version of the first connectivity graph. The computing device may determine a set of valid cliques, of the set of potential cliques, in the second connectivity graph and may determine, based on the set of valid cliques, a first set of maximal cliques in the second connectivity graph. The computing device may determine, based on a set of nodes of the second connectivity graph that are not included in the first set of maximal cliques, a second set of maximal cliques in the second connectivity graph. The computing device may determine second information identifying the first set of maximal cliques and the second set of maximal cliques.

## Description

### FIELD

The present disclosure relates generally to determining one or more maximal cliques in an updated connectivity graph and to efficiently determining the one or more maximal cliques in the updated connectivity graph (e.g., by conserving computing resources).

### BACKGROUND

A connectivity graph is a representation of a network or system, where nodes (also referred to as vertices) represent entities (e.g., devices or other objects) and edges (i.e., connections between nodes) represent relationships or links between those entities. A maximal clique in a connectivity graph is a set of nodes, where every pair of nodes in the set is directly connected by an edge and the set cannot be extended to include an additional node (while still remaining a clique).

### SUMMARY

Some implementations described herein relate to a method. The method may include obtaining, by a device, first information identifying one or more maximal cliques in a first connectivity graph. The method may include determining, by the device, based on the first information, a set of potential cliques in a second connectivity graph that is an updated version of the first connectivity graph. The method may include determining, by the device, a set of valid cliques, of the set of potential cliques, in the second connectivity graph. The method may include determining, by the device, based on the set of valid cliques, a first set of maximal cliques in the second connectivity graph. The method may include determining, by the device, based on the first set of maximal cliques in the second connectivity graph, a set of nodes of the second connectivity graph that are not included in the first set of maximal cliques. The method may include determining, by the device, based on the set of nodes of the second connectivity graph, a second set of maximal cliques in the second connectivity graph. The method may include determining, by the device, second information identifying the first set of maximal cliques in the second connectivity graph and the second set of maximal cliques in the second connectivity graph. The method may include causing, by the device, one or more respective control settings of a set of communication devices to be updated based on the second information.

Some implementations described herein relate to a device. The device may include one or more memories and one or more processors coupled to the one or more memories. The one or more processors may be configured to determine, based on first information identifying one or more maximal cliques in a first connectivity graph, a set of potential cliques in a second connectivity graph that is an updated version of the first connectivity graph. The one or more processors may be configured to determine a set of valid cliques, of the set of potential cliques, in the second connectivity graph. The one or more processors may be configured to determine, based on the set of valid cliques, one or more maximal cliques in the second connectivity graph. The one or more processors may be configured to provide second information identifying the one or more maximal cliques in the second connectivity graph.

Some implementations described herein relate to a non-transitory computer-readable medium that stores a set of instructions. The set of instructions, when executed by one or more processors of a device, may cause the device to determine a set of potential cliques in a second connectivity graph that is an updated version of a first connectivity graph. The set of instructions, when executed by one or more processors of the device, may cause the device to determine a set of valid cliques, of the set of potential cliques, in the second connectivity graph. The set of instructions, when executed by one or more processors of the device, may cause the device to determine, based on the set of valid cliques, one or more maximal cliques in the second connectivity graph.

The features, functions, and advantages that have been discussed can be achieved independently in various implementations or may be combined in yet other implementations further details of which can be seen with reference to the following description and drawings.

### BRIEF DESCRIPTION OF THE DRAWINGS

Figs. 1A-1F are diagrams of an example implementation associated with determination of one or more maximal cliques in an updated connectivity graph.
Fig. 2 is a diagram of an example environment in which systems and/or methods described herein may be implemented.
Fig. 3 is a diagram of example components of a device associated with determination of one or more maximal cliques in an updated connectivity graph.
Fig. 4 is a flowchart of an example process associated with determination of one or more maximal cliques in an updated connectivity graph.

### DETAILED DESCRIPTION

The following detailed description of example implementations refers to the accompanying drawings. The same reference numbers in different drawings may identify the same or similar elements.

A connectivity graph is often used to represent a network, a system, or another organizational structure of devices, or other types of objects or entities. For example, a connectivity graph associated with a network of communication devices (e.g., a network of user equipment, base stations, computers, satellites, along with other examples) can represent relationships between the communication devices (e.g., in terms of communication connections. communication capabilities, communication characteristics, along with other examples) within the network. Accordingly, a maximal clique in such a connectivity graph can represent, for example, communication devices that are directly connected to each other, have the same or similar communication capabilities, and/or exhibit the same or similar communication characteristics. This enables an administrator of the network to optimize resource allocation within the network, to improve fault tolerance within the network, to improve security of the network, along with other examples.

A computing device can identify maximal cliques in a connectivity graph using a recursive algorithm, such as a Bron-Kerbosch algorithm. While effective, this approach typically requires exploring all possible combinations of nodes within the connectivity graph, leading to significant computational cost - particularly when the connectivity graph is large or dense. As a result, the computing device consumes substantial computing resources (e.g., processing resources, memory resources, communication resources, and/or power resources, among other examples) to identify these maximal cliques. This process can also take considerable time, further impacting efficiency.

Additionally, when the connectivity graph is updated with only minor changes (e.g., a few added or removed nodes or edges), the computing device needs to reprocess the entire connectivity graph again from scratch, without regard to a prior analysis of a prior version of the connectivity graph, to identify new maximal cliques. This re-evaluation not only consumes additional computing resources, but also introduces delays that can hinder timely decision-making based on identification of the maximal cliques. Such delays can be particularly problematic when rapid analysis of the updated connectivity graph is crucial for subsequent actions or decisions based on the identified maximal cliques.

Some implementations described herein include a computing device that efficiently finds one or more maximal cliques in an updated connectivity graph (e.g., a connectivity graph that is an updated version of a prior connectivity graph). The computing device obtains first information identifying one or more maximal cliques in a first connectivity graph (e.g., that may have been determined by the computing device). The computing device identifies, based on the first information, a set of potential cliques in a second connectivity graph (e.g., that is an updated version of the first connectivity graph) that correspond to the one or more maximal cliques in the first connectivity graph. The computing device then determines a set of valid cliques, of the set of potential cliques, in the second connectivity graph (e.g., that includes potential cliques that still satisfy the definition of clique). The computing device determines, based on the set of valid cliques and using a recursive algorithm, such as a Bron-Kerbosch algorithm, a first set of maximal cliques in the second connectivity graph (e.g., that correspond to the one or more maximal cliques in the first connectivity graph).

In this way, by using information identifying maximal cliques of a prior version of the second connectivity graph, the computing device, using the recursive algorithm, can focus on expanding valid cliques that are likely to be included in the first set of maximal cliques in the second connectivity graph and minimize redundant exploration of unnecessary branches of the second connectivity graph. By focusing on relevant nodes (e.g., that are included in the set of valid cliques), minimizing redundant computations, and reducing recursion depth, the computing device can conserve computing resources (e.g., processing resources, memory resources, communication resources, and/or power resources, among other examples) and reduce delays associated with determining the first set of maximal cliques.

Further, in some implementations, the computing device identifies a set of nodes of the updated connectivity graph that are not included in the first set of maximal cliques and/or the set of valid cliques (e.g., a set of nodes that were not otherwise analyzed by the computing device yet). The computing device then determines, based on the set of nodes and using a recursive algorithm (e.g., that is the same as, or different than, the recursive algorithm mentioned above), a second set of maximal cliques in the second connectivity graph (e.g., that include at least some nodes of the set of nodes).

In this way, by focusing only on nodes not otherwise analyzed by the computing device, a search space of the second connectivity graph for identifying the second set of maximal cliques is reduced, which conserves computing resources and reduces delays associated with determining the second set of maximal cliques. Further, determining the second set of maximal cliques can be performed in parallel with, or independently from, determining the first set of maximal cliques. This enables distributed or staged processing of the second connectivity graph, which can further reduce use of computing resources of the computing device as well as overall computation time to identify maximal cliques in the second connectivity graph.

Accordingly, in some implementations, the computing device ensures a comprehensive analysis of the second connectivity graph while optimizing computing resources and time. As a result, the computing device can provide timely information identifying maximal cliques in the second connectivity graph, which supports applications that require rapid analysis (e.g., real-time or near-real-time analysis) of connectivity graphs. For example, the computing device can enable a rapid update of one or more respective control settings of a set of mobile communication devices that are associated with maximal cliques of the second connectivity graph, which can improve or optimize a performance of the set of communication devices as respective positions of the set of mobile communication devices change.

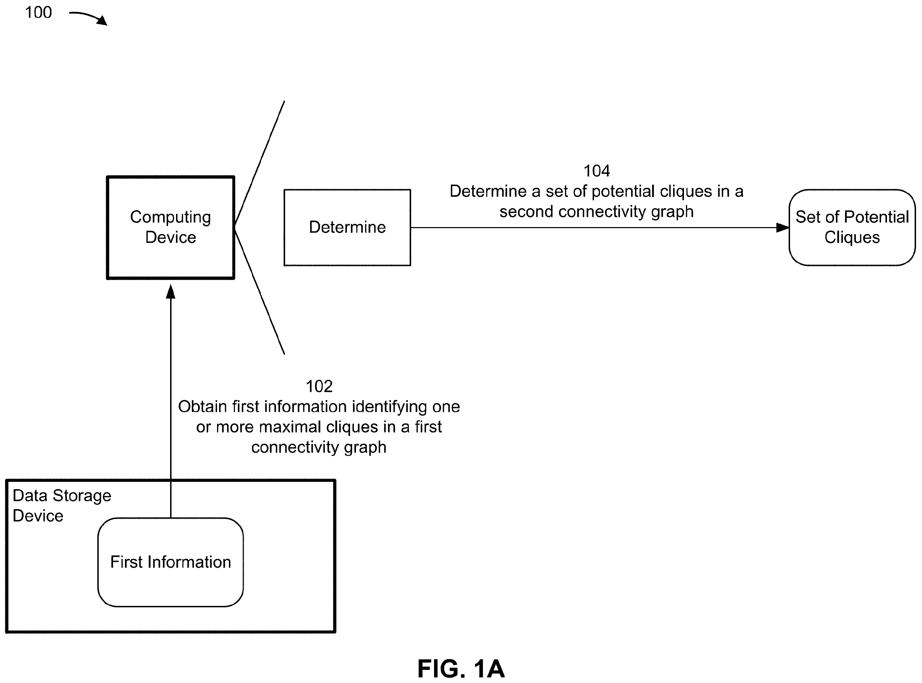

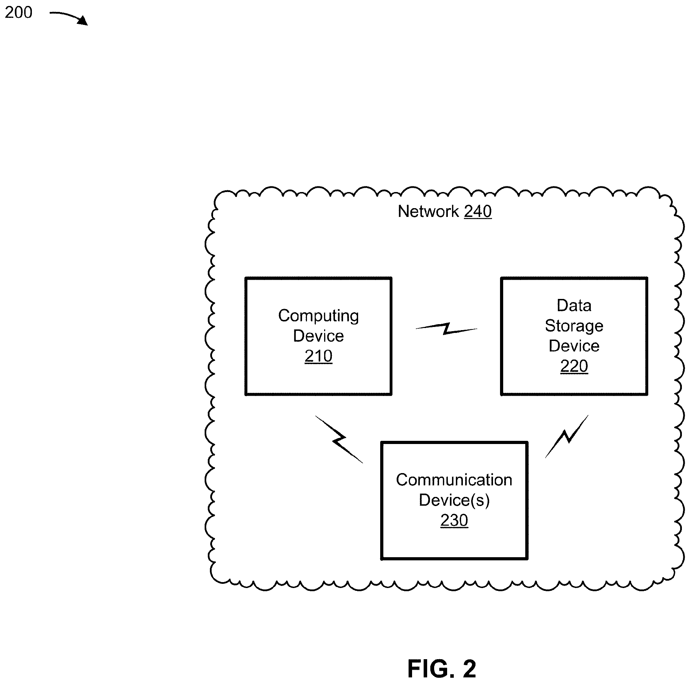

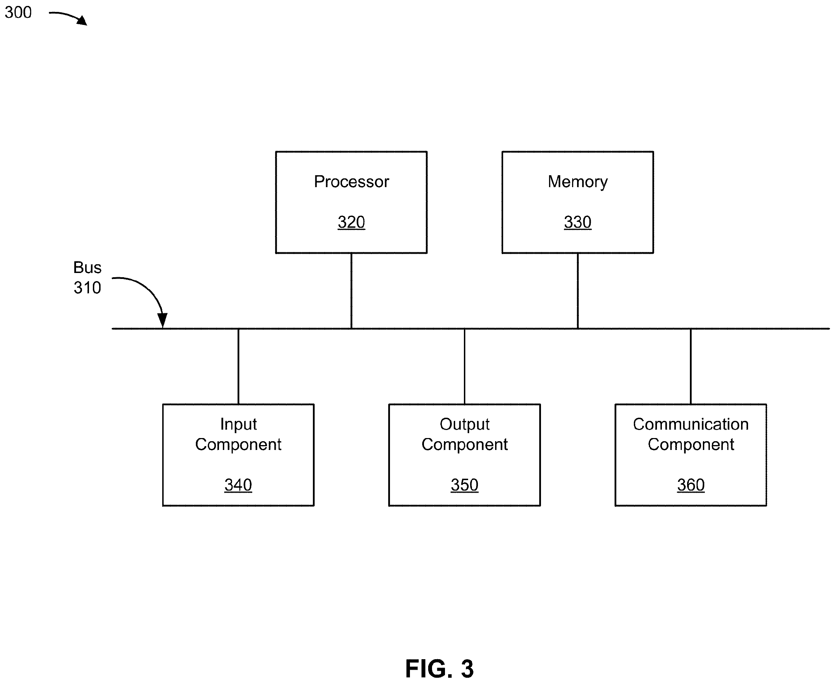

Figs. 1A-1F are diagrams of an example implementation 100 associated with determination of one or more maximal cliques in an updated connectivity graph. As shown in Figs. 1A-1F, example implementation 100 includes a computing device, a data storage device, and a set of communication devices (e.g., a set of one or more communication devices) of a plurality of communication devices. These devices are described in more detail below in connection with Fig. 2 and Fig. 3.

As shown in Fig. 1A, and by reference number 102, the computing device may obtain first information. The first information may identify one or more maximal cliques in a first connectivity graph. The first connectivity graph may be associated with the plurality of communication devices. For example, the first connectivity graph may represent a network, a system, or another organizational structure associated with the plurality of communication devices. Each node of the first connectivity graph may represent a communication device of at least some of the plurality of communication devices, and each edge of the first connectivity graph may represent a relationship or link between communication devices that are represented by nodes connected via the edge.

The computing device (or another computing device) may have determined the one or more maximal cliques in the first connectivity graph. For example, the computing device may have previously performed one or more operations described herein in relation to Figs. 1A-1F to determine the one or more maximal cliques in the first connectivity graph. The computing device then may have transmitted the first information that identifies the one or more maximal cliques in the first connectivity graph to the data storage device (e.g., via a connection between the computing device and the data storage device), such as to cause the data storage device to store the first information.

Accordingly, at a later time, the computing device may obtain the first information from the data storage device. For example, the computing device may transmit a request to the data storage device (e.g., via the connection between the computing device and the data storage device) and the data storage device, in response, may transmit (e.g., via the connection) the first information to the computing device. In this way, the computing device may receive the first information from another device (e.g., that is configured to store information identifying maximal cliques in connectivity graphs).

The computing device may obtain the first information to enable the computing device to determine one or more maximal cliques in a second connectivity graph, as further described herein. The second connectivity graph may also be associated with the plurality of communication devices. For example, the second connectivity graph may represent the network, the system, or the other organizational structure associated with the plurality of communication devices. Each node of the second connectivity graph may represent a communication device of at least some of the plurality of communication devices, and each edge of the second connectivity graph may represent a relationship or link between communication devices that are represented by nodes connected via the edge. Notably, the set of communication devices, of the plurality of communication devices, may be respectively associated with nodes of the second connectivity graph. That is, a set of nodes of the second connectivity graph may respectively represent the set of communication devices. In some implementations, the set of nodes may include nodes of the one or more maximal cliques in the second connectivity graph, which are to be determined by the computing device, as further described herein.

The second connectivity graph may be an updated version of the first connectivity graph. For example, the first connectivity graph may be associated with the plurality of communication devices at a first instant in time, and the second connectivity graph may be associated with the plurality of communication devices at a second instant in time (e.g., that occurs after the first instant in time). Accordingly, in some implementations, particular nodes of the first connectivity graph are included in the second connectivity graph. Notably, relationships or links between communication devices represented by the particular nodes may have changed from the first instant in time to the second instant in time, and thus at least some of particular edges of the first connectivity graph that are associated with the particular nodes (e.g., that connect the particular nodes to each other and/or to other nodes in the first connectivity graph) may not be included in the second connectivity graph. Additionally, other edges (e.g., new edges) of the second connectivity graph may be associated with the particular nodes in the second connectivity graph (e.g., may connect the particular nodes to each other and/or other nodes in the second connectivity graph).

As shown by reference number 104, the computing device may determine a set of potential cliques (e.g., a set of one or more potential cliques) in the second connectivity graph (e.g., based on the first information). The set of potential cliques in the second connectivity graph may correspond to the one or more maximal cliques in the first connectivity graph (e.g., as indicated by the first information). That is, a potential clique in the second connectivity graph may include at least some nodes of a maximal clique in the first connectivity graph, such as all nodes of the maximal clique in the first connectivity graph that are also included in the second connectivity graph. Thus, a potential clique may include nodes of the maximal clique, but because the second connectivity graph is an updated version of the first connectivity graph, at least some of the nodes may be associated with different edges.

To determine the set of potential cliques, the computing device may determine a mapping (e.g., based on the first information). The mapping may be between a set of first nodes of a particular maximal clique, of the one or more maximal cliques, in the first connectivity graph and a set of second nodes of the second connectivity graph. That is, the mapping may indicate which first nodes of the particular maximal clique correspond (e.g., have the same identification information, or other same or similar characteristics) to second nodes of the second connectivity graph. The computing device then may determine, based on the mapping, a particular potential clique, of the set of potential cliques, as including the set of second nodes of the second connectivity graph.

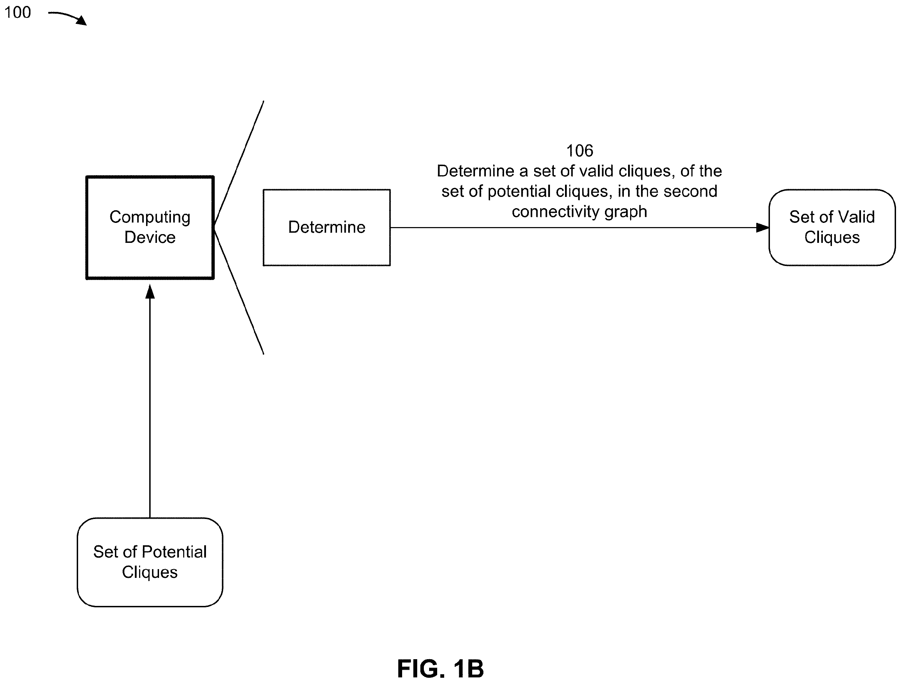

As shown in Fig. 1B, and by reference number 106, the computing device may determine a set of valid cliques, of the set of potential cliques, in the second connectivity graph. A valid clique is a clique that satisfies the definition of a clique, such that every pair of nodes in the clique is directly connected by an edge in the second connectivity graph. Accordingly, in some implementations, the computing device may determine that at least one potential clique, of the set of potential cliques, is a valid clique, and therefore the set of valid cliques may include one or more valid cliques. Alternatively, the computing device may determine that no potential clique, of the set of potential cliques, is a valid clique, and therefore the set of valid cliques may include zero valid cliques.

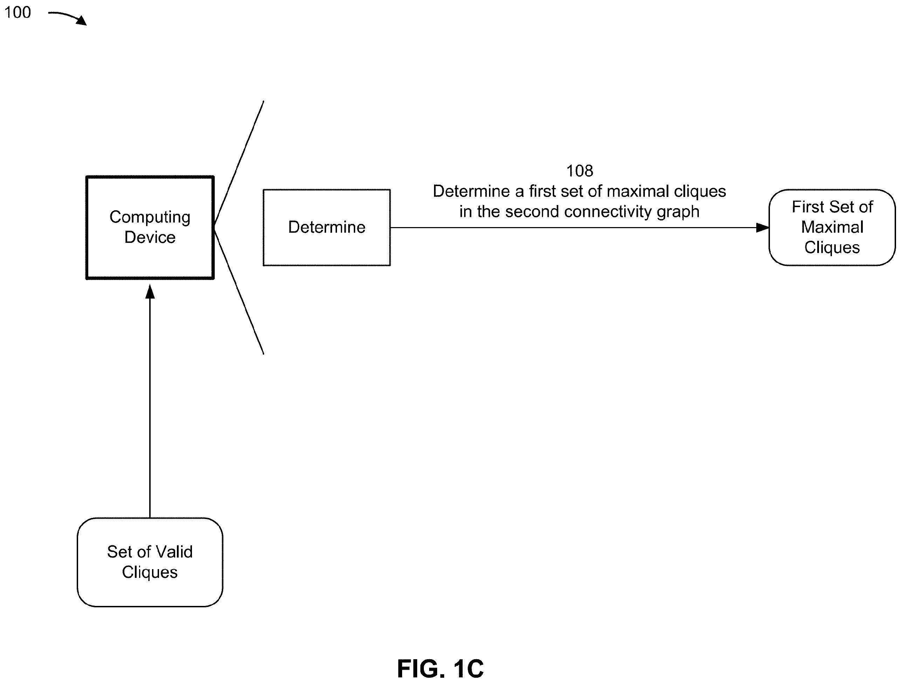

As shown in Fig. 1C, and by reference number 108, the computing device may determine a first set of maximal cliques in the second connectivity graph (e.g., based on the set of valid cliques). In some implementations, the computing device may use an analysis technique on the set of valid cliques to determine the first set of maximal cliques in the second connectivity graph. The analysis technique may include, for example, a recursive algorithm (e.g., a recursive graph analysis algorithm), such as a Bron-Kerbosch algorithm. For example, the computing device may use a valid clique as an input into a recursive algorithm, such as the Bron-Kerbosch algorithm, to determine one or more maximal cliques. In this way, the computing device may analyze each valid clique of the set of valid cliques to determine the first set of maximal cliques.

In some implementations, the first set of maximal cliques may include one or more maximal cliques. For example, by using the analysis technique on the set of valid cliques, the computing device may identify at least one maximal clique in the second connectivity graph that includes (e.g., is the same as, or is an expansion of) a valid clique of the set of valid cliques. Alternatively, the first set of maximal cliques may include zero maximal cliques. For example, the computing device may determine that none of the set of valid cliques is included in a maximal clique in the second connectivity graph. Additionally, when the set of valid cliques includes zero valid cliques, the computing device may not have any input to analyze, and therefore may determine that the first set of maximal cliques includes zero maximal cliques.

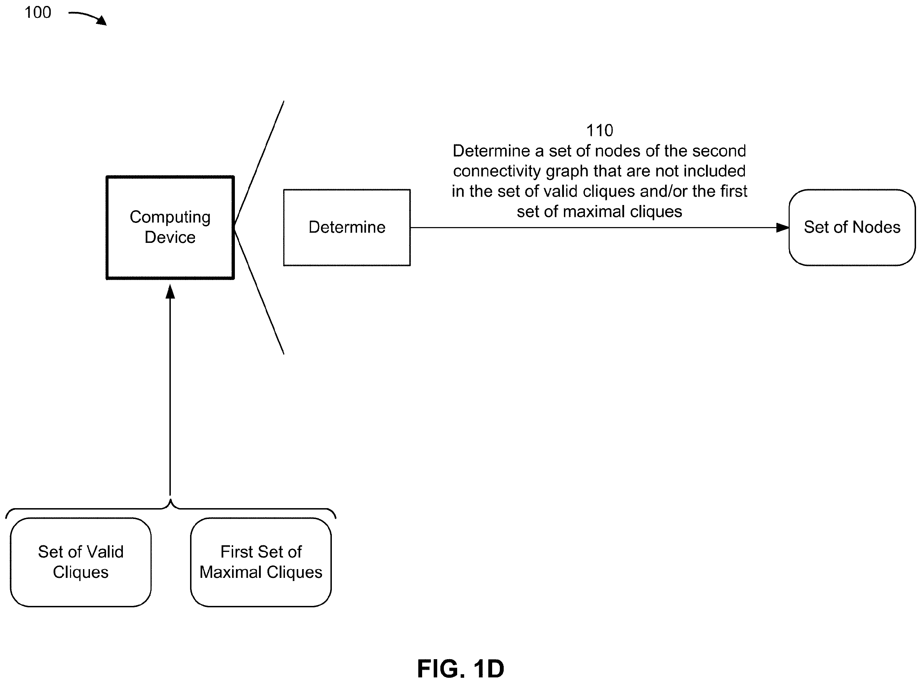

As shown in Fig. 1D, and by reference number 110, the computing device may determine a set of nodes of the second connectivity graph that are not included in the set of valid cliques and/or the first set of maximal cliques. That is, the computing device may determine a set of nodes that were not used as input to determine the first set of maximal cliques and/or that are not part of a maximal clique of the first set of maximal cliques. Accordingly, in some implementations, the set of nodes may include one or more nodes of the second connectivity graph, or, alternatively, may include zero nodes (e.g., when all nodes of the second connectivity graph are included in the set of valid cliques and/or the first set of maximal cliques).

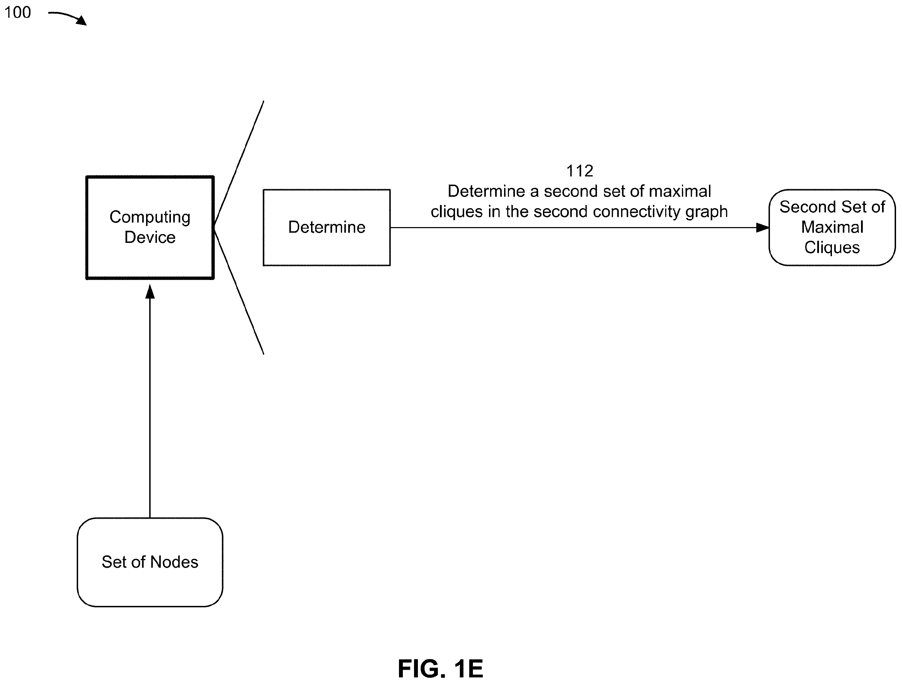

As shown in Fig. 1E, and by reference number 112, the computing device may determine a second set of maximal cliques in the second connectivity graph (e.g., based on the set of nodes of the second connectivity graph). In some implementations, the computing device may use an analysis technique (e.g., the same analysis technique described above, or alternatively, a different analysis technique) on the set of nodes to determine the second set of maximal cliques in the second connectivity graph. The analysis technique may include, for example, a recursive algorithm (e.g., a recursive graph analysis algorithm), such as a Bron-Kerbosch algorithm. For example, the computing device may use the set of nodes as an input into a recursive algorithm, such as the Bron-Kerbosch algorithm, to determine one or more maximal cliques. In this way, the computing device may analyze the set of nodes to determine the second set of maximal cliques.

In some implementations, the second set of maximal cliques may include one or more maximal cliques. For example, by using the analysis technique on the set of nodes, the computing device may identify at least one maximal clique in the second connectivity graph that includes at least some nodes of the set of nodes. Alternatively, the second set of maximal cliques may include zero maximal cliques. For example, the computing device may determine that no node of the set of nodes is included in a maximal clique in the second connectivity graph. Additionally, when the set of nodes includes zero nodes, the computing device may not have any input to analyze, and therefore may determine that the second set of maximal cliques includes zero maximal cliques.

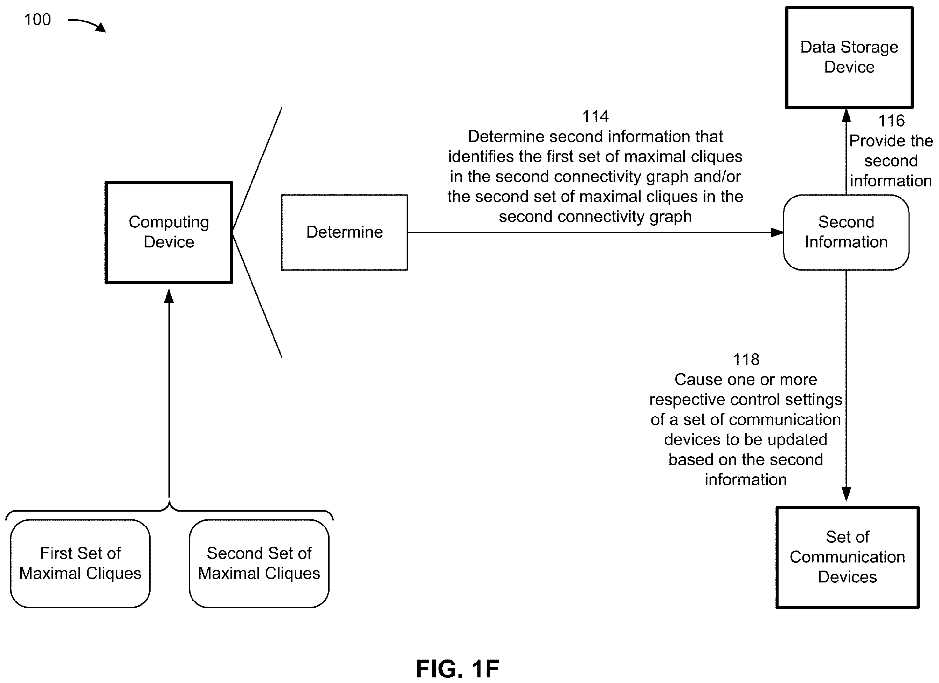

As shown in Fig. 1F, and by reference number 114, the computing device may determine second information that identifies the first set of maximal cliques in the second connectivity graph and/or the second set of maximal cliques in the second connectivity graph. For example, by identifying both the first set of maximal cliques and the second set of maximal cliques, the second information may identify all maximal cliques (e.g., one or more maximal cliques) in the second connectivity graph. As another example, by identifying only the first set of maximal cliques, the second information may identify only maximal cliques (e.g., zero, one, or more maximal cliques) in the second connectivity graph that have nodes in common with the one or more maximal cliques in the first connectivity graph. In an additional example, by identifying only the second set of maximal cliques, the second information may identify only maximal cliques (e.g., zero, one, or more maximal cliques) in the second connectivity graph that do not have nodes in common with the one or more maximal cliques in the first connectivity graph.

As shown in Fig. 1F, and by reference number 116, the computing device may provide the second information, such as to the data storage device. For example, the computing device may transmit the second information to the data storage device (e.g., via the connection between the computing device and the data storage device), such as to cause the data storage device to store the second information.

The computing device (or another computing device) then may obtain the second information (e.g., from the data storage device) at a later time to enable the computing device to determine one or more maximal cliques in a third connectivity graph (e.g., that is an updated version of the second connectivity graph), such as by performing one or more of the operations described herein in relation to Figs. 1A-1F. In this way, the computing device may be configured to iteratively determine information that identifies maximal cliques in updated versions of a connectivity graph.

As shown in Fig. 1F, and by reference number 118, the computing device may cause one or more respective control settings of the set of communication devices to be updated (e.g., based on the second information). As described elsewhere herein, the set of communication devices may be respectively associated with a set of nodes that includes nodes of the one or more maximal cliques in the second connectivity graph (e.g., as indicated by the second information). That is, the one or more maximal cliques may include the set of nodes, and the set of nodes may respectively represent the set of communication devices.

Accordingly, the computing device may transmit the second information, or alternatively, control information (e.g., that is generated by the computing device based on the second information), to the set of communication devices. This may cause set of communication devices, in response, to update the one or more respective control settings of the set of communication devices. In this way, the computing device may cause the set of communication devices to communicate in a particular manner or to exhibit a particular communication characteristic (e.g., because the set of communication devices are associated with the one or more maximal cliques in the second connectivity graph).

As indicated above, Figs. 1A-1F are provided as an example. Other examples may differ from what is described with regard to Figs. 1A-1F. The number and arrangement of devices shown in Figs. 1A-1F are provided as an example. In practice, there may be additional devices, fewer devices, different devices, or differently arranged devices than those shown in Figs. 1A-1F. Furthermore, two or more devices shown in Figs. 1A-1F may be implemented within a single device, or a single device shown in Figs. 1A-1F may be implemented as multiple, distributed devices. Additionally, or alternatively, a set of devices (e.g., one or more devices) shown in Figs. 1A-1F may perform one or more functions described as being performed by another set of devices shown in Figs. 1A-1F.

Fig. 2 is a diagram of an example environment 200 in which systems and/or methods described herein may be implemented. As shown in Fig. 2, environment 200 may include a computing device 210, a data storage device 220, one or more communication devices 230, and a network 240. Devices of environment 200 may interconnect via wired connections, wireless connections, or a combination of wired and wireless connections.

The computing device 210 may include one or more devices capable of receiving, generating, storing, processing, and/or providing information associated with determination of one or more maximal cliques in an updated connectivity graph, as described elsewhere herein. For example, the computing device 210 may include a server, such as an application server, a client server, a web server, a database server, a host server, a proxy server, a virtual server (e.g., executing on computing hardware), or a server in a cloud computing system. In some implementations, the computing device 210 may include computing hardware used in a cloud computing environment, such as one or more serverless components (e.g., one or more serverless functions), among other examples. In some implementations, the computing device 210 may include a wireless communication device, a mobile phone, a user equipment, a laptop computer, a tablet computer, a desktop computer, or a similar type of device. The computing device 210 may communicate with one or more other devices of environment 200, as described elsewhere herein.

The data storage device 220 may include one or more devices capable of receiving, generating, storing, processing, and/or providing information associated with determination of one or more maximal cliques in an updated connectivity graph, as described elsewhere herein. The data storage device 220 may include a database, a server, a database server, an application server, a client server, a web server, a host server, a proxy server, a virtual server (e.g., executing on computing hardware), a server in a cloud computing system, a device that includes computing hardware used in a cloud computing environment, or a similar type of device. The data storage device 220 may communicate with one or more other devices of environment 200, as described elsewhere herein.

The communication device 230 may include one or more devices capable of receiving, generating, storing, processing, and/or providing information associated with determination of one or more maximal cliques in an updated connectivity graph, as described elsewhere herein. The communication device 230 may be a wireless communication device, a mobile phone, a user equipment, a base station, a laptop computer, a tablet computer, a desktop computer, a gaming console, a set-top box, a wearable communication device (e.g., a smart wristwatch, a pair of smart eyeglasses, a head mounted display, or a virtual reality headset), or a similar type of device. In some implementations, the communication device 230 may be a non-terrestrial communication device, such as a low-earth orbit (LEO) satellite, a medium-earth orbit (MEO) satellite, a geostationary earth orbit (GEO) satellite, a high elliptical orbit (HEO) satellite, or another type of satellite. The communication device 230 may communicate with one or more other devices of environment 200, as described elsewhere herein.

The network 240 may include one or more wired and/or wireless networks. For example, the network 240 may include a wireless wide area network (e.g., a cellular network or a public land mobile network), a satellite network, a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 240 enables communication among the devices of environment 200.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with determination of one or more maximal cliques in an updated connectivity graph. The device 300 may correspond to the computing device 210, the data storage device 220, and/or the communication device 230. In some implementations, the computing device 210, the data storage device 220, and/or the communication device 230 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

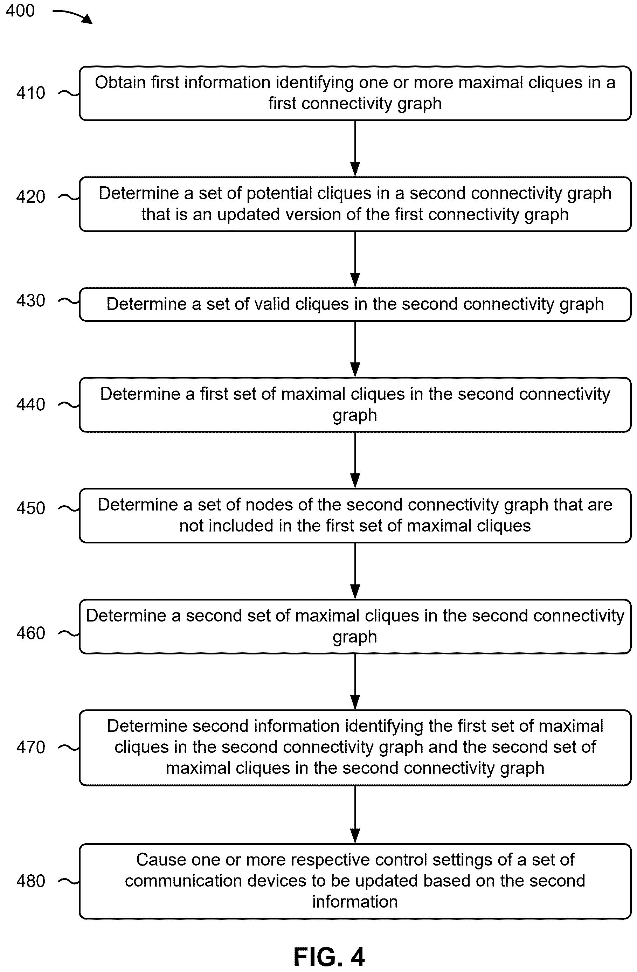

Fig. 4 is a flowchart of an example process 400 associated with determination of one or more maximal cliques in an updated connectivity graph. In some implementations, one or more process blocks of Fig. 4 are performed by a computing device (e.g., the computing device 210). In some implementations, one or more process blocks of Fig. 4 are performed by another device or a group of devices separate from or including the computing device, such as a data storage device (e.g., the data storage device 220) and/or a communication device (e.g., the communication device 230). Additionally, or alternatively, one or more process blocks of Fig. 4 may be performed by one or more components of device 300, such as processor 320, memory 330, input component 340, output component 350, and/or communication component 360.

As shown in Fig. 4, process 400 may include obtaining first information identifying one or more maximal cliques in a first connectivity graph (block 410). For example, the computing device may obtain first information identifying one or more maximal cliques in a first connectivity graph, as described above.

As further shown in Fig. 4, process 400 may include determining a set of potential cliques in a second connectivity graph that is an updated version of the first connectivity graph (block 420). For example, the computing device may determine, based on the first information, a set of potential cliques in a second connectivity graph that is an updated version of the first connectivity graph, as described above.

As further shown in Fig. 4, process 400 may include determining a set of valid cliques in the second connectivity graph (block 430). For example, the computing device may determine a set of valid cliques, of the set of potential cliques, in the second connectivity graph, as described above.

As further shown in Fig. 4, process 400 may include determining a first set of maximal cliques in the second connectivity graph (block 440). For example, the computing device may determine, based on the set of valid cliques, a first set of maximal cliques in the second connectivity graph, as described above.

As further shown in Fig. 4, process 400 may include a set of nodes of the second connectivity graph that are not included in the first set of maximal cliques (block 450). For example, the computing device may determine, based on the first set of maximal cliques in the second connectivity graph, a set of nodes of the second connectivity graph that are not included in the first set of maximal cliques, as described above.

As further shown in Fig. 4, process 400 may include a second set of maximal cliques in the second connectivity graph (block 460). For example, the computing device may determine, based on the set of nodes of the second connectivity graph, a second set of maximal cliques in the second connectivity graph, as described above.

As further shown in Fig. 4, process 400 may include determining second information identifying the first set of maximal cliques in the second connectivity graph and the second set of maximal cliques in the second connectivity graph (block 470). For example, the computing device may determine second information identifying the first set of maximal cliques in the second connectivity graph and the second set of maximal cliques in the second connectivity graph, as described above.

As further shown in Fig. 4, process 400 may include causing one or more respective control settings of a set of communication devices to be updated based on the second information (block 480). For example, the computing device may cause one or more respective control settings of a set of communication devices to be updated based on the second information, as described above.

Process 400 may include additional implementations, such as any single implementation or any combination of implementations described below and/or in connection with one or more other processes described elsewhere herein.

In a first implementation, the set of communication devices are respectively associated with nodes of the second connectivity graph.

In a second implementation, alone or in combination with the first implementation, obtaining the first information comprises receiving the first information from another device that is configured to store information identifying maximal cliques in connectivity graphs.

In a third implementation, alone or in combination with one or more of the first and second implementations, the set of potential cliques in the second connectivity graph correspond to the one or more maximal cliques in the first connectivity graph.

In a fourth implementation, alone or in combination with one or more of the first through third implementations, determining the set of potential cliques in the second connectivity graph comprises determining, based on the first information, a mapping between a set of first nodes of a particular maximal clique, of the one or more maximal cliques, in the first connectivity graph and a set of second nodes of the second connectivity graph, and determining, based on the mapping, a particular potential clique, of the set of potential cliques, as including the set of second nodes of the second connectivity graph.

In a fifth implementation, alone or in combination with one or more of the first through fourth implementations, determining the first set of maximal cliques in the second connectivity graph comprises determining, using an analysis technique that utilizes a Bron-Kerbosch algorithm on the set of valid cliques, the first set of maximal cliques in the second connectivity graph.

In a sixth implementation, alone or in combination with one or more of the first through fifth implementations, determining the second set of maximal cliques in the second connectivity graph comprises determining, using an analysis technique that utilizes a Bron-Kerbosch algorithm on the set of nodes of the second connectivity graph, the second set of maximal cliques in the second connectivity graph.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the implementations described herein to the precise forms that are described. Modifications and variations may be made in light of the above description or may be acquired from practice of the implementations described herein.

It will be apparent that systems and/or methods described herein may be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

Even though particular combinations of features are recited in the claims and/or described in the specification, these combinations are not intended to limit the implementations described herein. In fact, many of these features may be combined in ways not specifically recited in the claims and/or described in the specification. Although each dependent claim listed below may directly depend on only one claim, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items,), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

Further, the present disclosure provides aspects according to the following clauses.
Clause 1. A method, comprising:
   obtaining, by a device, first information identifying one or more maximal cliques in a first connectivity graph;
   determining, by the device, based on the first information, a set of potential cliques in a second connectivity graph that is an updated version of the first connectivity graph;
   determining, by the device, a set of valid cliques, of the set of potential cliques, in the second connectivity graph;
   determining, by the device, based on the set of valid cliques, a first set of maximal cliques in the second connectivity graph;
   determining, by the device, based on the first set of maximal cliques in the second connectivity graph, a set of nodes of the second connectivity graph that are not included in the first set of maximal cliques;
   determining, by the device, based on the set of nodes of the second connectivity graph, a second set of maximal cliques in the second connectivity graph;
   determining, by the device, second information identifying the first set of maximal cliques in the second connectivity graph and the second set of maximal cliques in the second connectivity graph; and
   causing, by the device, one or more respective control settings of a set of communication devices to be updated based on the second information.
Clause 2. The method of clause 1, wherein the set of communication devices are respectively associated with nodes of the second connectivity graph.
Clause 3. The method of clause 1, wherein obtaining the first information comprises:
   receiving the first information from another device that is configured to store information identifying maximal cliques in connectivity graphs.
Clause 4. The method of clause 1, wherein the set of potential cliques in the second connectivity graph correspond to the one or more maximal cliques in the first connectivity graph.
Clause 5. The method of clause 1, wherein determining the set of potential cliques in the second connectivity graph comprises:
   determining, based on the first information, a mapping between a set of first nodes of a particular maximal clique, of the one or more maximal cliques, in the first connectivity graph and a set of second nodes of the second connectivity graph; and
   determining, based on the mapping, a particular potential clique, of the set of potential cliques, as including the set of second nodes of the second connectivity graph.
Clause 6. The method of clause 1, wherein determining the first set of maximal cliques in the second connectivity graph comprises:
   determining, using an analysis technique that utilizes a Bron-Kerbosch algorithm on the set of valid cliques, the first set of maximal cliques in the second connectivity graph.
Clause 7. The method of clause 1, wherein determining the second set of maximal cliques in the second connectivity graph comprises:
   determining, using an analysis technique that utilizes a Bron-Kerbosch algorithm on the set of nodes of the second connectivity graph, the second set of maximal cliques in the second connectivity graph.
Clause 8. A device, comprising:
   one or more memories; and
   one or more processors, coupled to the one or more memories, configured to:
      determine, based on first information identifying one or more maximal cliques in a first connectivity graph, a set of potential cliques in a second connectivity graph that is an updated version of the first connectivity graph;
      determine a set of valid cliques, of the set of potential cliques, in the second connectivity graph;
      determine, based on the set of valid cliques, one or more maximal cliques in the second connectivity graph; and
      provide second information identifying the one or more maximal cliques in the second connectivity graph.
Clause 9. The device of clause 8, wherein the one or more processors, to provide the second information, are configured to:
   transmit the second information to another device.
Clause 10. The device of clause 8, wherein the one or more processors, to determine the set of potential cliques in the second connectivity graph, are configured to:
   determine, based on the first information, a mapping between a set of first nodes of a particular maximal clique, of the one or more maximal cliques, in the first connectivity graph and a set of second nodes of the second connectivity graph; and
   determine, based on the mapping, a particular potential clique, of the set of potential cliques, as including the set of second nodes of the second connectivity graph.
Clause 11. The device of clause 8, wherein the one or more processors, to determine one or more maximal cliques in the second connectivity graph, are configured to:
   determine, based on the set of valid cliques, a first set of maximal cliques in the second connectivity graph; and
   determine, based on a set of nodes of the second connectivity graph that are not included in the first set of maximal cliques, a second set of maximal cliques in the second connectivity graph.
Clause 12. The device of clause 11, wherein the second information identifies the first set of maximal cliques in the second connectivity graph and the second set of maximal cliques in the second connectivity graph.
Clause 13. The device of clause 11, wherein the one or more processors, to determine the first set of maximal cliques in the second connectivity graph, are configured to:
   determine, using an analysis technique that utilizes a Bron-Kerbosch algorithm on the set of valid cliques, the first set of maximal cliques in the second connectivity graph.
Clause 14. The device of clause 11, wherein the one or more processors, to determine the second set of maximal cliques in the second connectivity graph, are configured to:
   determine, using an analysis technique that utilizes a Bron-Kerbosch algorithm on the set of nodes of the second connectivity graph, the second set of maximal cliques in the second connectivity graph.
Clause 15. The device of clause 8, wherein the one or more processors are further configured to:
   cause one or more respective control settings of a set of communication devices to be updated based on the second information.
Clause 16. A non-transitory computer-readable medium storing a set of instructions, the set of instructions comprising: one or more instructions that, when executed by one or more processors of a device, cause the device to:
   determine a set of potential cliques in a second connectivity graph that is an updated version of a first connectivity graph;
   determine a set of valid cliques, of the set of potential cliques, in the second connectivity graph; and
   determine, based on the set of valid cliques, one or more maximal cliques in the second connectivity graph.
Clause 17. The non-transitory computer-readable medium of clause 16, wherein the one or more instructions, that cause the device to determine the set of potential cliques in the second connectivity graph, cause the device to:
   determine a mapping between a set of first nodes of a particular maximal clique in the first connectivity graph and a set of second nodes of the second connectivity graph; and
   determine, based on the mapping, a particular potential clique, of the set of potential cliques, as including the set of second nodes of the second connectivity graph.
Clause 18. The non-transitory computer-readable medium of clause 16, wherein the one or more instructions, that cause the device to determine the one or more maximal cliques in the second connectivity graph, cause the device to at least one of:
   determine, based on the set of valid cliques, a first set of maximal cliques in the second connectivity graph; or
   determine, based on a set of nodes of the second connectivity graph that are not included in the set of valid cliques, a second set of maximal cliques in the second connectivity graph.
Clause 19. The non-transitory computer-readable medium of clause 18, wherein the one or more instructions, that cause the device to determine the first set of maximal cliques in the second connectivity graph, cause the device to:
   determine, using an analysis technique that utilizes a recursive algorithm on the set of valid cliques, the first set of maximal cliques in the second connectivity graph.
Clause 20. The non-transitory computer-readable medium of clause 18, wherein the one or more instructions, that cause the device to determine the second set of maximal cliques in the second connectivity graph, cause the device to:
   determine, using an analysis technique that utilizes a recursive algorithm on the set of nodes of the second connectivity graph, the second set of maximal cliques in the second connectivity graph.

## Claims

1. A method, comprising:
obtaining, by a device (210), first information identifying one or more maximal cliques in a first connectivity graph;
determining, by the device (210), based on the first information, a set of potential cliques in a second connectivity graph that is an updated version of the first connectivity graph;
determining, by the device (210), a set of valid cliques, of the set of potential cliques, in the second connectivity graph;
determining, by the device (210), based on the set of valid cliques, a first set of maximal cliques in the second connectivity graph;
determining, by the device (210), based on the first set of maximal cliques in the second connectivity graph, a set of nodes of the second connectivity graph that are not included in the first set of maximal cliques;
determining, by the device (210), based on the set of nodes of the second connectivity graph, a second set of maximal cliques in the second connectivity graph;
determining, by the device (210), second information identifying the first set of maximal cliques in the second connectivity graph and the second set of maximal cliques in the second connectivity graph; and
causing, by the device (210), one or more respective control settings of a set of communication devices (230) to be updated based on the second information.

2. The method of claim 1, wherein the set of communication devices (230) are respectively associated with nodes of the second connectivity graph.

3. The method of any one of the preceding claims, wherein obtaining the first information comprises:
receiving the first information from another device (220) that is configured to store information identifying maximal cliques in connectivity graphs.

4. The method of any one of the preceding claims, wherein determining the set of potential cliques in the second connectivity graph comprises:
determining, based on the first information, a mapping between a set of first nodes of a particular maximal clique, of the one or more maximal cliques, in the first connectivity graph and a set of second nodes of the second connectivity graph; and
determining, based on the mapping, a particular potential clique, of the set of potential cliques, as including the set of second nodes of the second connectivity graph.

5. The method of any one of the preceding claims, wherein determining the first set of maximal cliques in the second connectivity graph comprises:
determining, using an analysis technique that utilizes a Bron-Kerbosch algorithm on the set of valid cliques, the first set of maximal cliques in the second connectivity graph.

6. The method of any one of the preceding claims, wherein determining the second set of maximal cliques in the second connectivity graph comprises:
determining, using an analysis technique that utilizes a Bron-Kerbosch algorithm on the set of nodes of the second connectivity graph, the second set of maximal cliques in the second connectivity graph.

7. A device (210), comprising:
one or more memories (330); and
one or more processors (320), coupled to the one or more memories (330), configured to:
determine, based on first information identifying one or more maximal cliques in a first connectivity graph, a set of potential cliques in a second connectivity graph that is an updated version of the first connectivity graph;
determine a set of valid cliques, of the set of potential cliques, in the second connectivity graph;
determine, based on the set of valid cliques, a first set of maximal cliques in the second connectivity graph;
determine, based on the first set of maximal cliques in the second connectivity graph, a set of nodes of the second connectivity graph that are not included in the first set of maximal cliques;
determine, based on the set of nodes of the second connectivity graph, a second set of maximal cliques in the second connectivity graph;
determine second information identifying the first set of maximal cliques in the second connectivity graph and the second set of maximal cliques in the second connectivity graph; and
causing one or more respective control settings of a set of communication devices (230) to be updated based on the second information.

8. The device (210) of claim 7, wherein the one or more processors (320), which are configured to provide the second information, are further configured to:
transmit the second information to another device (220, 230).

9. The device of any one of claims 7-8, wherein the one or more processors (320), which are configured to determine the set of potential cliques in the second connectivity graph, are further configured to:
determine, based on the first information, a mapping between a set of first nodes of a particular maximal clique, of the one or more maximal cliques, in the first connectivity graph and a set of second nodes of the second connectivity graph; and
determine, based on the mapping, a particular potential clique, of the set of potential cliques, as including the set of second nodes of the second connectivity graph.

10. The device (210) of claim 9, wherein the second information identifies the first set of maximal cliques in the second connectivity graph and the second set of maximal cliques in the second connectivity graph.

11. The device (210) of claim 9, wherein the one or more processors (320), which are configured to determine the first set of maximal cliques in the second connectivity graph, are further configured to:
determine, using an analysis technique that utilizes a Bron-Kerbosch algorithm on the set of valid cliques, the first set of maximal cliques in the second connectivity graph.

12. The device (210) of claim 9, wherein the one or more processors (320), which are configured to determine the second set of maximal cliques in the second connectivity graph, are further configured to:
determine, using an analysis technique that utilizes a Bron-Kerbosch algorithm on the set of nodes of the second connectivity graph, the second set of maximal cliques in the second connectivity graph.

13. A non-transitory computer-readable medium (330) storing a set of instructions, the set of instructions comprising:
one or more instructions that, when executed by one or more processors (320) of a device (210), cause the device (210) to:
determine a set of potential cliques in a second connectivity graph that is an updated version of a first connectivity graph;
determine a set of valid cliques, of the set of potential cliques, in the second connectivity graph;
determine, based on the set of valid cliques, one or more maximal cliques in the second connectivity graph;
determine, based on the first set of maximal cliques in the second connectivity graph, a set of nodes of the second connectivity graph that are not included in the first set of maximal cliques;
determine, based on the set of nodes of the second connectivity graph, a second set of maximal cliques in the second connectivity graph;
determine second information identifying the first set of maximal cliques in the second connectivity graph and the second set of maximal cliques in the second connectivity graph; and
cause one or more respective control settings of a set of communication devices (230) to be updated based on the second information..

14. The non-transitory computer-readable medium (330) of claim 13, wherein the one or more instructions, that cause the device (210) to determine the first set of maximal cliques in the second connectivity graph, cause the device (210) to:
determine, using an analysis technique that utilizes a recursive algorithm on the set of valid cliques, the first set of maximal cliques in the second connectivity graph.

15. The non-transitory computer-readable medium (330) of any one of claims 13-14, wherein the one or more instructions, that cause the device (210) to determine the second set of maximal cliques in the second connectivity graph, cause the device (210) to:
determine, using an analysis technique that utilizes a recursive algorithm on the set of nodes of the second connectivity graph, the second set of maximal cliques in the second connectivity graph.
